# EUROPEAN PATENT APPLICATION

(11) **EP 3 522 031 A1**
(43) Date of publication of application: **07.08.2019**
(21) Application number: 18200800.3
(22) Date of filing: 16.10.2018
(51) Int. Cl.: G06F 16/683, H04R 1/02, G10L 19/018, G10L 15/22, G10L 25/48, G10H 1/00

(54) **SMART SPEAKER WITH MUSIC RECOGNITION**

(30) Priority: 01.02.2018 US 201862625307 P; 05.10.2018 US 201816152435
(71) Applicant: Nano Shield Technology Co., Ltd., 10492 Taipei City (TW)
(72) Inventor: Lee, James Cheng, 10492 Taipei City (TW)
(74) Representative: Gee, Steven William

(57) **Abstract**

A smart speaker with music recognition is disclosed, including: a housing, an input device and a control device. The input device receives music information from a music source. The control device includes a processing unit, a storage unit, a communication unit, a voice module and a music recognition module. The storage unit contains a music database. The music recognition module recognizes the feature value of the music information, and uses the feature value to perform melody comparison with the plurality of songs stored in the music database, to search for specific songs and related information in the music database matching the feature value, and upload to the cloud server through the communication unit. After browsing the webpage from the cloud server, the user knows whether a specific song and related information matching the feature value of the music information are stored in the music database.

## Description

### CROSS-REFERENCE TO RELATED APPLICATION

This application claims the priorities of US provisional patent application No. 62/625,307, filed on February 1, 2018 and US non-provisional patent application No. 16/152,435, filed on October 5, 2018 , which are incorporated herewith by reference.

### BACKGROUND OF THE INVENTION

### 1. Field of the Invention

The technical field generally relates to a smart speaker, and in particular to a smart speaker with music recognition.

### 2. The Prior Arts

Voice assistant, also known as the intelligent personal assistant, or virtual assistant, is a product of artificial intelligence. The voice assistant needs to be equipped with hardware components, such as, a speaker, microphone, Bluetooth, WI-FI module and processing unit, to operate. Many devices with the above hardware components and voice assistants have been developed, and smart speakers are among the most popular. The feature of the smart speaker is that the smart speaker has no screen, no keyboard, no buttons, and can only be controlled by sound.

The dialogue interface of the voice assistant is a user interface that mimics human conversation. Therefore, the user needs to speak a trigger word to the smart speaker. After the microphone receives the sound, the sound wave of the trigger word is converted into a signal and transmitted to the voice assistant, and the voice assistant can be woken up to ensure that the voice assistant executes tasks only when the instruction is issued. Then, after the user starts to speak to the smart speaker, the sound wave of the command is converted into a signal and transmitted to the voice assistant. After the voice assistant understands the user's instruction, the smart speaker performs the task assigned by the user immediately.

There are many famous voice assistants, such as, Apple's Siri, Google's Assistant, Amazon's Alexa, Microsoft's Cortana, and Samsung's Bixby.

Voice assistants are very versatile and able to find information via the Internet (e.g., time, calendar, weather, traffic, news, stock quotes, itinerary, retail price or sporting events, etc.), process tasks (e.g., setting an alarm clock), send messages, play music, shop online and control smart lights, thermostats, garage doors, air-conditioning, televisions, computers, refrigerators, etc.), collect information (e.g., customer service center to collect user information, medical services provide preliminary diagnosis, etc.), train skills (e.g., learning a new language by talking to an AI teacher), manage to-do items and shopping lists, and order take-out, and book reservation, and so on.

Sometimes users want to find the music information from Pandora, Spotify, Apple Music and other online music streaming service platforms, or from the radio stations, TVs, shops and other platforms, when a certain enjoyable music is playing. The user may want to use the voice assistant to see if there are specific songs and related information stored in the music library that match the music information just heard. However, without knowing the name of a specific song, the user is unable to use the voice assistant for retrieving such music information. Because the voice assistant has only voice recognition ability and no music recognition ability, even if the user plays the melody of the music heard on the smart speaker, the voice assistant cannot understand the instruction, and thus cannot find the music matching the song from the music database. Therefore, the user has no way to know through the voice assistant whether a specific song and related information that matches the music information that is heard are stored in the music database.

### SUMMARY OF THE INVENTION

The primary objective of the present invention is to provide a smart speaker with music recognition, able to quickly search for a specific song and related information matching the feature value of a heard music information from a music database through music recognition technology, and upload to a cloud server, and the user, after browsing a webpage from the cloud server, able to know indirectly whether a specific song and related information matching the feature value of the music information being stored in the music database.

To achieve the foregoing and other objects, the present invention provides a smart speaker with music recognition, which comprises: a housing, an input device, and a control device.

The input device is disposed in the housing and configured to receive a voice message from a user and a piece of music information from a music source.

The control device is disposed in the housing and comprises a processing unit, a storage unit, a communication unit, a voice module, and a music recognition module.

The input device is electrically connected to the processing unit.

The storage unit is electrically connected to the processing unit, and comprises a music database, and the music database stores a plurality of songs and related information.

The communication unit is electrically connected to the processing unit, and is configured to connect to a cloud server through an internet.

The voice module is electrically connected to the processing unit, and is used for voice recognition of the voice message.

The music recognition module is electrically connected to the processing unit, and is configured to recognize a feature value of the music information, and use the feature value of the music information to perform melody comparison with the plurality of songs stored in the music database, for searching the music database for a specific song and related information that match the feature value of the music information, and the specific song and related information are further uploaded to the cloud server through the communication unit.

Preferably, the music source is an online music streaming service platform or a music playing device, the music information is a melody played by the online music streaming service platform or the music playing device; the music recognition module uses a music audio fingerprinting (AFP) recognition technology to identify the feature value of the melody played by the online music streaming service platform or the music playing device, and uses the feature value of the melody played by the online music streaming service platform or the music playing device and the plurality of songs stored in the music database to perform a melody comparison to search for a specific song and related information from the music database that match the feature value of the melody played by the online music streaming service platform or the music playing device.

Preferably, the housing comprises an outer casing, a top cover and a bottom cover, the outer casing encloses an accommodation space, and an opening is formed at the top; the top cover is disposed in the opening of the outer casing and is disposed with a sound receiving hole; the bottom cover is disposed at bottom of the outer casing, the input device is a microphone disposed in the accommodation space of the outer casing and aligned with the sound receiving hole of the top cover, and the control device is disposed in the accommodation space of the outer casing.

Preferably, the smart speaker with music recognition further comprises a power supply unit and a wireless charging coil, wherein the power supply unit is disposed in the housing, electrically connected to the processing unit, and provides power to the processing unit; the wireless charging coil is disposed in the housing, electrically connected to the power supply unit, and can charge the power supply unit.

The effect of the present invention is that a specific song and related information therein that match the feature value of the heard music information can be quickly searched from the music database through the music recognition technology, and uploaded to the cloud server, and the user, after browsing a webpage from the cloud server, able to know indirectly whether a specific song and related information matching the feature value of the music information being stored in the music database.

The foregoing will become better understood from a careful reading of a detailed description provided herein below with appropriate reference to the accompanying drawings.

### BRIEF DESCRIPTION OF THE DRAWINGS

The embodiments can be understood in more detail by reading the subsequent detailed description in conjunction with the examples and references made to the accompanying drawings, wherein:
FIG. 1 shows a schematic view of the smart speaker with music recognition in accordance with an exemplary embodiment;
FIG. 2 shows a dissected view of the housing and other components of the smart speaker with music recognition in accordance with an exemplary embodiment;
FIG. 3 shows a dissected view of the upper part of the housing and other components of the smart speaker with music recognition in accordance with an exemplary embodiment;
FIG. 4 shows a dissected view of the lower part of the housing and other components of the smart speaker with music recognition in accordance with an exemplary embodiment; and
FIG. 5 shows a schematic view of the structural block diagram of the smart speaker with music recognition in accordance with an exemplary embodiment.

### DETAILED DESCRIPTION OF THE DISCLOSED EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

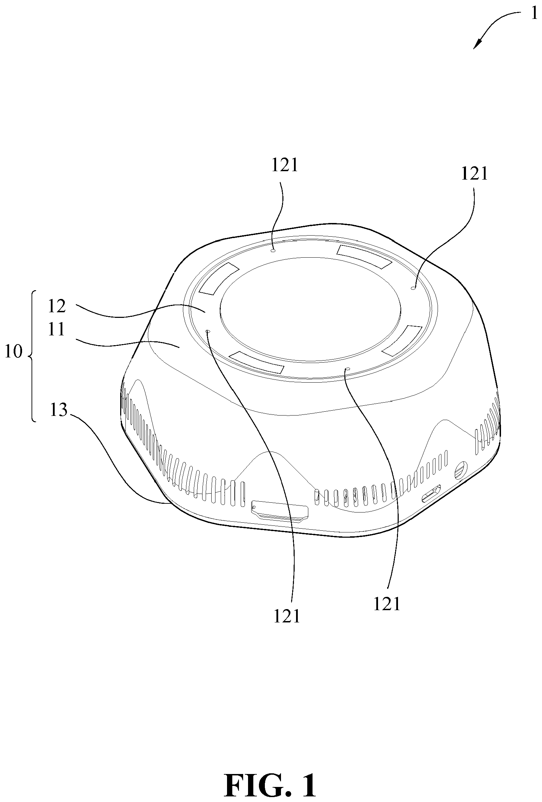

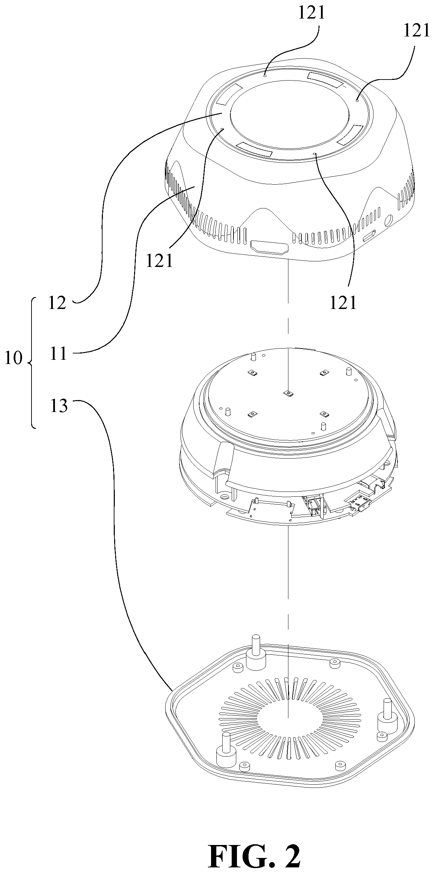

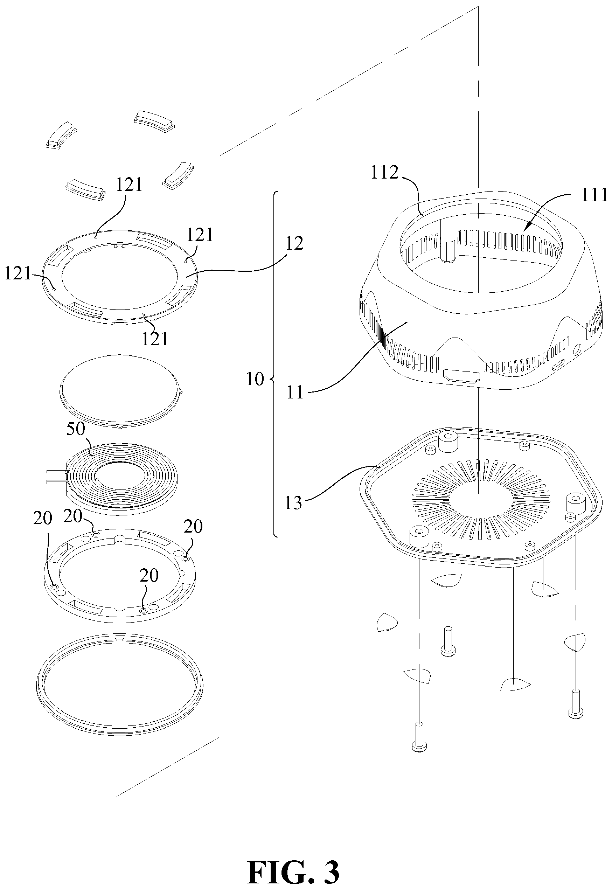

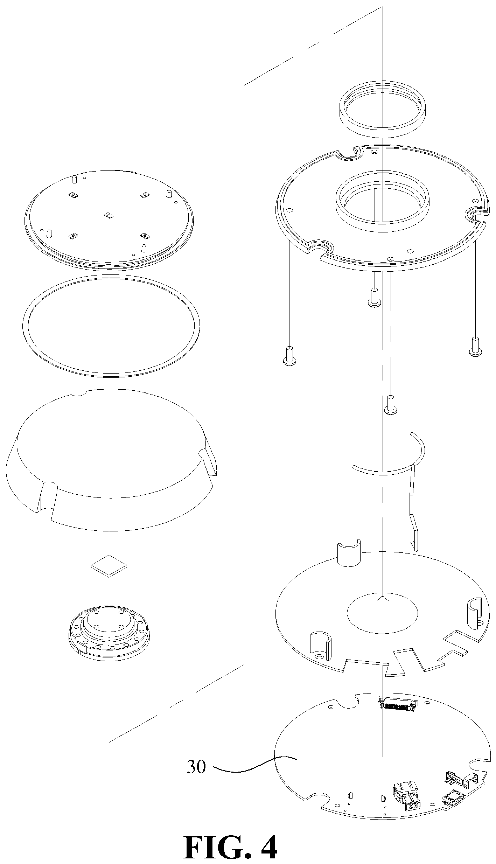

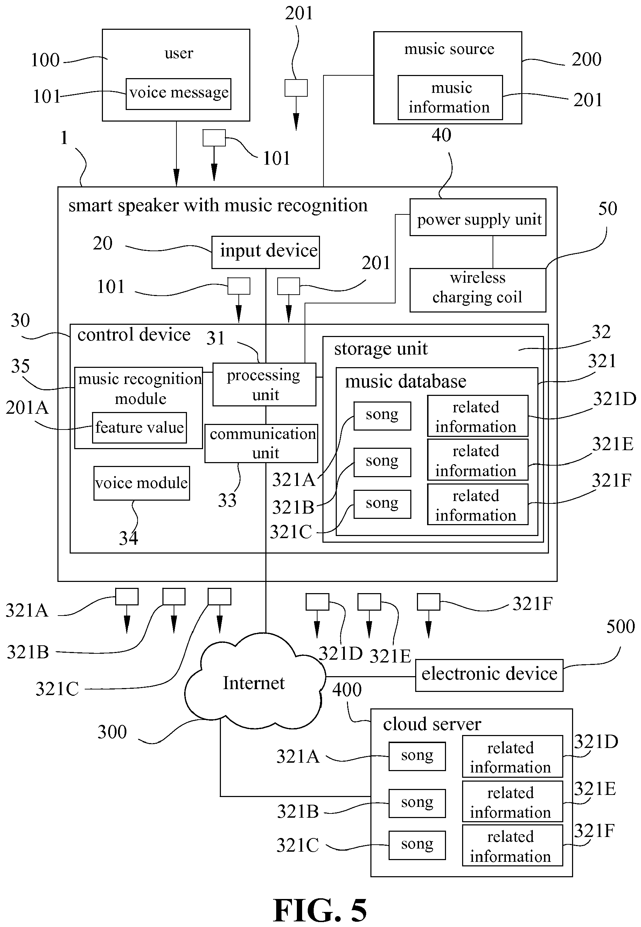

Refer to FIG. 1 to FIG. 5. FIG. 1 shows a schematic view of the smart speaker with music recognition in accordance with an exemplary embodiment; FIG. 2 shows a dissected view of the housing and other components of the smart speaker with music recognition in accordance with an exemplary embodiment; FIG. 3 shows a dissected view of the upper part of the housing and other components of the smart speaker with music recognition in accordance with an exemplary embodiment; FIG. 4 shows a dissected view of the lower part of the housing and other components of the smart speaker with music recognition in accordance with an exemplary embodiment; and; FIG. 5 shows a schematic view of the structural block diagram of the smart speaker with music recognition in accordance with an exemplary embodiment. The present invention provides a smart speaker with music recognition, comprising: a housing 10, an input device 20 and a control device 30.

The housing 10 comprises an outer casing 11, a top cover 12 and a bottom cover 13. The outer casing 11 encloses an accommodation space 111, and an opening 112 is formed at the top. The top cover 12 is disposed in the opening 112 of the outer casing 11 and is disposed with a sound receiving hole 121. The bottom cover 13 is disposed at bottom of the outer casing 11.

The input device 20 is disposed in the housing 10 configured to receive a voice message 101 from a user 100 and a piece of music information 201 from a music source 200. Specifically, the input device 20 is a microphone, disposed inside the accommodation space 111 of the outer casing 11 and aligned with the sound receiving hole 121 of the top cover 12. The voice message 101 from the user 100 or the piece of music information 201 from the music source 200 passes through the sound receiving hole 121 of the top cover 12 to reach the microphone. After the microphone receives the voice message 101 or music information 201, the microphone transmits the voice message 101 or music information 201 to the control device 30. In the present embodiment, the top cover 12 is equidistantly disposed with four sound receiving holes 121. The smart speaker 1 with the music recognition of the present invention comprises four input devices 20 disposed in the accommodation space 111 of the outer casing 11 and respectively aligned with the four sound receiving holes 121 of the top cover 12.

The control device 30 is disposed in the housing 10 and comprises a processing unit 31, a storage unit 32, a communication unit 33, a voice module 34, and a music recognition module 35. Specifically, the control device 30 is disposed in the accommodation space 111 of the outer casing 11.

The processing unit 31 is, for example, a central processing unit, or another programmable general-purpose or special-purpose microprocessor, a digital signal processor (DSP), a programmable controller, application specific integrated circuits (ASICs), programmable logic devices (PLDs), or other similar devices or combinations of these devices. The processing unit 31 is electrically connected to the input unit 20, the storage unit 32, the communication unit 33, the voice module 34, and the music recognition module 35 for accessing and executing the voice module 34 and music recognition module 35 recorded in the storage unit 32, and control the overall operation of the smart speaker 1. The processing unit 31 in the present embodiment is not limited to a single processing element (single core), and may be jointly executed by two or more processing elements (dual-core or multi-cores).

The storage unit 32 is electrically connected to the processing unit 31, and comprises a music database 321. The music database 321 stores a plurality of songs 321A, 321B, and 321C and related information 321D, 321E, and 321F. The storage unit 32 is, for example, various non-volatile memory or a combination thereof, such as a read-only memory (ROM) and/or a flash memory. In the present embodiment, the storage unit 32 is used to record the voice module 34 and the music recognition module 35. These modules are, for example, programs stored in the storage unit 32, which can be loaded into the processing unit 31, and the processing unit 31 performs the functions of the programs. It should be noted that, in the present embodiment, the storage unit 32 is not limited to a single memory component, and the modules may be separately stored in two or more memory components of the same or different types.

The communication unit 33 is electrically connected to the processing unit 31 and is configured to connect to a cloud server 400 through Internet 300. The communication unit 33 is, for example, a wired network interface card or a wireless network interface card supporting a protocol such as IEEE802.11b/g/n of the Institute of Electrical and Electronics Engineers (IEEE), or supporting other network protocols able to transmit or receive data through a network. In the present embodiment, the communication unit 33 can be used to connect to the Internet 300, so that the smart speaker 1 can transmit data to the cloud server 400 via the Internet 300, and receive data from the cloud server 400 via the Internet 300. In addition, the communication unit 33 can be connected to the local network to provide the smart speaker 1 to control the electronic devices located in the same local network via the local network (for example, smart home appliances in a smart home belonging to the same home network).

The voice module 34 is electrically connected to the processing unit 31 and used for voice recognition of the voice message 101. The voice module 34 used in the smart speaker 1 with music recognition of the present invention can be a voice module 34 developed by any manufacturer on the market, such as Apple's Siri, Google's Assistant, Amazon's Alexa, Microsoft's Cortana, Samsung's Bixby, or a voice module 34 developed by other vendors. Each of the vendors has disclosed the detailed technical content of the voice module 34 developed by the vendors, which is easily available to those skilled in the art, and is not the focus of the present invention, and details are not described herein.

The functions of the voice module 34 are very versatile and able to find information via the Internet (e.g., time, calendar, weather, traffic, news, stock quotes, itinerary, retail price or sporting events, etc.), process tasks (e.g., setting an alarm clock), send messages, play music, shop online and control smart lights, thermostats, garage doors, air-conditioning, televisions, computers, refrigerators, etc.), collect information (e.g., customer service center to collect user information, medical services provide preliminary diagnosis, etc.), train skills (e.g., learning a new language by talking to an AI teacher), manage to-do items and shopping lists, and order take-out, and book reservation, and so on.

The music recognition module 35 is electrically connected to the processing unit 31, and is configured to recognize a feature value 201A of the music information 201, and use the feature value 201A of the music information 201 and the plurality of songs 321A, 321B, 321C stored in the music database 321 to perform melody comparison to search the music database 321 for a specific song 321A, 321B, 321C and related information 321D, 321E, 321F which match the feature value 201A of the music information 201. The matching specific song 321A, 321B, 321C and related information 321D, 321E, and 321F are further uploaded to the cloud server 400 through the communication unit 33. The related information 321D, 321E, and 321F are the song title, the song category, the length of time, the artist, the album, the publisher, the publishing year, and so on; however, any information related to the songs 321A, 321B, and 321C are not limited thereto, and thus covered by scope of the related information 321D, 321E, and 321F of the present invention.

When the user 100 likes the melody or lyrics of the music information 201 from the music source 200, the user 100 would like to look up from the smart speaker 1 with music recognition of the present invention to see if the music database 321 stores the specific songs 321A, 321B, 321C and their related information 321D, 321E, 321F that match the heard music information 201. However, without knowing the title of the specific songs 321A, 321B, 321C that match the feature value 201A of the heard music information 201. At this point, the user 100 can play the melody of the heard music information 201 against the input device 20. After receiving the music information 201, the input device 20 transmits the music information 201 to the music recognition module 35 through the processing unit 31. The music recognition module 35 recognizes the feature value 201A of the music information 201, and uses the feature value 201A of the music information 201 to perform melody comparison with the plurality of songs 321A, 321B, and 321C stored in the music database 321 for finding in the music database 321 the specific songs 321A, 321B, and 321C and related information 321D, 321E, and 321F that match the feature value 201A of the music information 201, and the specific songs 321A, 321B, and 321C and the related information 321D, 321E, and 321F are further transmitted through the communication unit 33 to be uploaded to the cloud server 400.

The user can browse the webpage from the cloud server 400 through the Internet 300 using an electronic device 500 (for example, a smart phone, a tablet computer, a desktop computer, a notebook computer, and so on.). In the webpage from the cloud server 400, the user can see the specific songs 321A, 321B, and 321C and related information 321D, 321E, and 321F uploaded by the smart speaker 1 with the music recognition of the present invention, and can indirectly know whether the music database 321 stores the specific songs 321A, 321B, 321C and related information 321D, 321E, 321F that match the feature value 201A of the music information 201 that is heard.

Specifically, the music source 200 is an online music streaming service platform or a music playing device, and the music information 201 is a melody played by the online music streaming service platform or the music playing device. The online music streaming service platform is Pandora, Spotify or Apple Music. The above three music streaming service platforms are internationally well-known brands; however, other online music streaming service platforms can also be used as music sources 200. The music playing device is any device equipped with a speaker and having a music playing function, such as a television, a radio, a smart phone, a portable multi-function digital multimedia player (such as an iPod), a tablet computer, a desktop computer, and a notebook computer, smart speaker 1, and so on. The music recognition module 35 a music voiceprint recognition (AFP) technology to identify the feature value 201A of the melody played by the online music streaming service platform or the music playing device, and uses the feature value 201A of the melody played by the online music streaming service platform or the music playing device and the plurality of songs 321A, 321B, 321C stored in the music database 321 to perform a melody comparison to search for a specific song 321A, 321B, 321C and related information 321D, 321E, 321F from the music database 321 that match the feature value 201A of the melody played by the online music streaming service platform or the music playing device.

In a preferred embodiment, the smart speaker 1 with music recognition further comprises a power supply unit 40 and a wireless charging coil 50. The power supply unit 40 is disposed in the housing 10, electrically connected to the processing unit 31, and provides power to the processing unit 31. The wireless charging coil 50 is disposed in the housing 10, electrically connected to the power supply unit 40, and can charge the power supply unit 40.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A smart speaker with music recognition, comprising:
a housing;
an input device, disposed in the housing and configured to receive a voice message from a user and a piece of music information from a music source; and
a control device, disposed in the housing and comprising:
a processing unit, the input device being electrically connected to the processing unit;
a storage unit, electrically connected to the processing unit, and comprising a music database, and the music database stores a plurality of songs and related information;
a communication unit, electrically connected to the processing unit, and configured to connect to a cloud server through Internet;
a voice module, electrically connected to the processing unit, and used for voice recognition of the voice message; and
a music recognition module, electrically connected to the processing unit, and configured to recognize a feature value of the music information and use the feature value of the music information to perform melody comparison with the plurality of songs stored in the music database, for searching the music database for a specific song and related information that match the feature value of the music information, and the specific song and related information being further uploaded to the cloud server through the communication unit.

2. The smart speaker with music recognition as claimed in claim 1, wherein the music source is an online music streaming service platform or a music playing device, the music information is a melody played by the online music streaming service platform or the music playing device; the music recognition module uses a music audio fingerprinting (AFP) recognition technology to identify the feature value of the melody played by the online music streaming service platform or the music playing device, and uses the feature value of the melody played by the online music streaming service platform or the music playing device and the plurality of songs stored in the music database to perform a melody comparison to search for a specific song and related information from the music database that match the feature value of the melody played by the online music streaming service platform or the music playing device.

3. The smart speaker with music recognition as claimed in claim 1, wherein the housing comprises an outer casing, a top cover and a bottom cover, the outer casing encloses an accommodation space, and an opening is formed at the top; the top cover is disposed in the opening of the outer casing and is disposed with a sound receiving hole; the bottom cover is disposed at bottom of the outer casing, the input device is a microphone disposed in the accommodation space of the outer casing and aligned with the sound receiving hole of the top cover, and the control device is disposed in the accommodation space of the outer casing.

4. The smart speaker with music recognition as claimed in claim 1, wherein the smart speaker with music recognition further comprises a power supply unit and a wireless charging coil, wherein the power supply unit is disposed in the housing, electrically connected to the processing unit, and provides power to the processing unit; the wireless charging coil is disposed in the housing, electrically connected to the power supply unit, and can charge the power supply unit.
